# FASCICULE DE BREVET EUROPEEN

(11) **EP 4 476 181 B1**
(45) Date de publication et mention de la délivrance du brevet: **01.04.2026**
(21) Numéro de dépôt: 23711518.3
(22) Date de dépôt: 24.02.2023
(51) Int. Cl.: C01G 55/00

(54) **PROCÉDÉ DE PURIFICATION DU RUTHÉNIUM VIS-À-VIS DU TECHNÉTIUM ET D'IMPURETÉS MÉTALLIQUES EN SOLUTION AQUEUSE D'ACIDE NITRIQUE**
VERFAHREN ZUR REINIGUNG VON RUTHENIUM GEGENÜBER TECHNETIUM UND METALLISCHEN VERUNREINIGUNGEN IN WÄSSRIGER SALPETERSÄURELÖSUNG
METHOD FOR PURIFYING RUTHENIUM FROM TECHNETIUM AND METAL IMPURITIES IN AQUEOUS NITRIC ACID SOLUTION

(30) Priorité: 10.03.2022 FR 2202100
(43) Date de publication de la demande: 18.12.2024
(73) Titulaire: Commissariat à l'Energie Atomique et aux Energies Alternatives, 75015 Paris (FR); Orano, 92320 Chatillon (FR)
(72) Inventeur: ANDREIADIS, Eugen, 84000 AVIGNON (FR); MOREAU, Ella, 81600 BRENS (FR)
(74) Mandataire: Santarelli
(86) Numéro de dépôt international: PCT/FR2023/050266
(87) Numéro de publication internationale: WO 2023/170354

(56) Documents cités:
- JP-A- H09 203 792
- VERMA PARVEEN KUMAR ET AL: "Highly efficient separation of ruthenium from alkaline radioactive feeds using an anion exchange resin", vol. 108, no. 8, 1 August 2020 (2020-08-01), DE, pages 603 - 613, XP055977444, ISSN: 0033-8230, Retrieved from the Internet <URL:http://dx.doi.org/10.1515/ract-2019-3182> DOI: 10.1515/ract-2019-3182
- KOKATE S J ET AL: "Reversed phase extraction chromatographic separation of ruthenium(III)", JOURNAL OF SAUDI CHEMICAL SOCIETY, ELSEVIER, AMSTERDAM, NL, vol. 14, no. 1, 1 January 2010 (2010-01-01), pages 41 - 45, XP026883980, ISSN: 1319-6103, [retrieved on 20091216], DOI: 10.1016/J.JSCS.2009.12.007
- VERMA PARVEEN K ET AL: "Ruthenium speciation in radioactive wastes and state-of-the-art strategies for its recovery: A review", SEPARATION AND PURIFICATION TECHNOLOGY, ELSEVIER SCIENCE, AMSTERDAM, NL, vol. 275, 18 June 2021 (2021-06-18), XP086714839, ISSN: 1383-5866, [retrieved on 20210618], DOI: 10.1016/J.SEPPUR.2021.119148

## Description

### Domaine technique

L'invention se rapporte au domaine de la séparation et de la purification d'éléments métalliques en solution.

Plus spécifiquement, l'invention se rapporte à un procédé pour purifier le ruthénium à partir d'une solution aqueuse d'acide nitrique dans laquelle il est présent conjointement avec du technétium et des impuretés métalliques, à une concentration au moins 10 fois inférieure à celle du technétium.

Elle se rapporte également à un procédé de production de ruthénium-97 à partir d'une cible de technétium-99 ayant été irradiée par des protons, qui comprend la mise en œuvre de ce procédé de purification.

L'invention trouve notamment application dans la fabrication de radio-pharmaceutiques à base de ruthénium-97, utiles en médecine nucléaire pour le diagnostic des cancers par imagerie et leur traitement par radiothérapie ciblée.

### État de la technique antérieure

Le ruthénium-97 est un isotope radioactif du ruthénium dont la demi-vie est de 2,9 jours et qui fait l'objet depuis plusieurs années de recherches prometteuses dans le traitement par radiothérapie ciblée, aussi appelée radiothérapie vectorisée, de certaines tumeurs de petite taille comme la carcinose péritonéale d'origine ovarienne ou colorectale. D'autres applications possibles porteraient sur la maladie métastatique ou résiduelle dans d'autres situations pathologiques.

Le ruthénium-97 fait également partie des radioisotopes dont il a été montré qu'ils présentent un intérêt en imagerie médicale, notamment pour réaliser des examens par tomographie par émission monophotonique (ou SPECT de *Single photon emission computed tomography).*

Dans les deux cas, l'utilisation du ruthénium-97 peut impliquer que celui-ci soit administré au patient sous la forme d'un radiopharmaceutique, c'est-à-dire d'un produit dans lequel il est lié à un vecteur, c'est-à-dire une molécule capable de cibler très spécifiquement les cellules cancéreuses que l'on souhaite détruire (s'il s'agit de radiothérapie ciblée) ou détecter (s'il s'agit d'imagerie médicale), telle qu'un anticorps.

Pour ce faire, le ruthénium-97 doit satisfaire à des exigences de pureté radiologique, celle-ci devant être idéalement supérieure à 99,00 %.

Le ruthénium-97 est habituellement produit par bombardement d'une cible de molybdène naturel (qui contient du molybdène-95) avec des particules α, mais le rendement est faible, notamment du fait de la faible abondance en ⁹⁵Mo dans le molybdène naturel, et la réaction est accompagnée par la formation du ¹⁰³Ru, isotope à vie longue pénalisant pour des applications médicales.

Le ruthénium-97 peut également être produit par irradiation d'une cible de technétium-99 par des protons et, plus spécifiquement, par une réaction nucléaire ⁹⁹Tc(p,3n)⁹⁷Ru dans la plage d'énergie des protons de 20 MeV à 100 MeV, comme décrit, par exemple, par N.G. Zaitseva et al. dans Radiochimica Acta 1992, 56, 59-68, ci-après référence **[1],** et dans *A*pplied Radiation and Isotopes 1996, 47(2), 145-151, ci-après référence **[2].** Cette voie de production présente un intérêt certain car, outre que son rendement est bien supérieur à celui de l'irradiation d'une cible de molybdène naturel, elle offre la possibilité de valoriser le technétium-99 susceptible d'être récupéré lors du traitement de combustibles nucléaires usés.

Dans ce cas, le ruthénium-97 est produit conjointement avec du technétium-97 et du molybdène-97.

Pour récupérer le ruthénium-97 ainsi produit, le procédé le plus employé comprend, après dissolution de la cible irradiée dans de l'acide nitrique concentré et substitution du milieu nitrique par un milieu sulfurique par distillation, une oxydation du ruthénium sous sa forme tétraoxyde de ruthénium, RuO₄, qui est volatile. Cette oxydation est réalisée au moyen d'un oxydant fort (comme le periodate de potassium ou le persulfate d'ammonium) et par chauffage à reflux. L'oxyde volatile est ensuite récupéré par piégeage dans de l'acide chlorhydrique ou un mélange d'acide chlorhydrique et de peroxyde d'hydrogène pour réduire le ruthénium(VIII) en ruthénium(III) (cf. référence **[2]**).

Ce procédé présente des limitations importantes, notamment en termes de rendement, en raison de pertes en ruthénium par fuite de gaz dans le montage ainsi que par sorption et réduction du RuO₄ sur les parois du réacteur avec formation de dioxyde de ruthénium, RuO₂. De plus, la réduction du ruthénium(VIII) dans les pièges est parfois partielle et conduit à des espèces ayant des degrés d'oxydation mal définis, ce qui diminue encore le rendement de récupération du ruthénium-97, pose des problèmes de contamination radiologique et complexifie l'étape de vectorisation du ruthénium-97 nécessaire à la préparation du radiopharmaceutique. Enfin, des phénomènes d'entraînement de l'acide pertechnétique, HTcO₄, pendant le reflux affectent la séparation du ruthénium vis-à-vis du technétium et diminuent par conséquent le facteur de séparation FS_{Ru/Tc}.

Dans un tout autre domaine technique, à savoir le traitement des combustibles nucléaires usés, il a été proposé dans la demande de brevet européen 0 347 625, ci-après référence **[3]**, un procédé pour séparer le ruthénium du technétium et du palladium à partir d'une solution aqueuse d'acide nitrique comprenant de nombreux éléments métalliques (Tc, Ru, Pd, Zr, Ce, U, Pu, Am, Mo) avec un large excès de ruthénium par rapport au technétium (13 fois plus).

Dans ce procédé, de la diéthylthiourée (ou DEHT) est ajoutée à la solution aqueuse à traiter pour réduire les espèces métalliques qu'elle contient. Le palladium précipite sous forme de Pd(0), ce qui permet de le séparer par filtration, alors que le ruthénium et le technétium forment des complexes cationiques, respectivement [Ru(NO)-DETHₓ]^{2+ et 3+} et Tc(IV)O²⁺. Le ruthénium et le technétium sont ensuite séparés des autres espèces métalliques par passage de la solution sur une résine échangeuse de cations qui retient sélectivement ces deux éléments métalliques. Le technétium est ensuite récupéré par élution avec une solution composée de peroxyde d'hydrogène et d'acide nitrique, permettant de l'oxyder en technétium(VII). Puis, le ruthénium est récupéré par élution de la résine avec une solution aqueuse d'acide nitrique fortement concentrée. KOKATE S J et al (JOURNAL OF SAUDI CHEMICAL SOCIETY, vol. 14, no. 1, 1 janvier 2010, pages 41-45) divulgue un procédé de purification du ruthénium en solution dans l'acide d'acide hydrochlorique et non nitrique, en présence d'osmium et d'iridium.

Compte-tenu de ce qui précède, les Inventeurs se sont fixé pour but de fournir un procédé qui, tout en permettant de purifier très efficacement le ruthénium à partir d'une solution aqueuse d'acide nitrique dans laquelle il est présent conjointement avec du technétium et des impuretés métalliques, à une concentration au moins 10 fois inférieure à celle du technétium, soit exempt des limitations présentées par le procédé décrit dans la référence **[2]**.

En particulier, ils se sont fixé pour but que ce procédé ne fasse appel à aucune réaction d'oxydation ou de réduction, soit simple à mettre en œuvre, soit automatisable et ne nécessite pas une consommation de solvants en grandes quantités dont des solvants toxiques.

### Exposé de l'invention

Ces buts sont atteints par l'invention qui propose, en premier lieu, un procédé de purification du ruthénium à partir d'une solution aqueuse A1 d'acide nitrique comprenant, outre le ruthénium à une concentration C1, du technétium à une concentration C2 au moins 10 fois supérieure à C1, et des impuretés métalliques, qui comprend au moins les étapes successives suivantes :
a) une extraction du ruthénium de la solution aqueuse au moyen d'une résine échangeuse de cations qui retient le ruthénium sélectivement par rapport au technétium lorsque le ruthénium et le technétium sont dans une solution aqueuse d'acide nitrique de molarité comprise entre une première valeur M1 et une deuxième valeur M2 supérieure à M1, cette extraction comprenant une mise en contact, dans une colonne de chromatographie, de la résine échangeuse de cations avec la solution aqueuse A1, la molarité de la solution aqueuse A1 étant comprise entre M1 et M2 ;
b) au moins un lavage de la résine échangeuse de cations avec une solution aqueuse A2 d'acide nitrique de molarité comprise entre M1 et M2 ; et
c) une élution du ruthénium de la résine échangeuse de cations avec une solution aqueuse A3 d'acide nitrique ou chlorhydrique de molarité supérieure à M2 ou une solution aqueuse A4 d'acide nitrique ou chlorhydrique de molarité au plus égale à M2 et comprenant un nitrate ou un chlorure métallique, moyennant quoi on obtient une solution aqueuse A5 contenant du ruthénium.

Dans le cadre de la présente invention, on obtient un facteur de décontamination du ruthénium vis-à-vis du technétium au moins égal à 400, ce facteur de décontamination correspondant au rapport du ratio des concentrations du ruthénium et du technétium dans la solution aqueuse A1 sur le ratio des concentrations de ces deux éléments dans la solution aqueuse A5.

Dans ce qui précède et ce qui suit, on entend par *impureté métallique,* un métal qui est présent dans la solution aqueuse A1 à une concentration au moins 20 fois inférieure à la concentration C1 du ruthénium et, par conséquent, au moins 200 fois inférieure à la concentration C2 du technétium.

Dans le cadre de l'invention, les impuretés métalliques peuvent notamment être du molybdène et du rhodium.

Par ailleurs, le terme « molarité », appliqué à une solution aqueuse d'un acide tel que l'acide nitrique ou l'acide chlorhydrique, est pris dans son sens habituel, à savoir qu'il désigne la concentration molaire en cet acide que présente ladite solution aqueuse.

En outre, les expressions « de ...... à ...... » et « compris(e) entre ...... et ...... », appliquées à une gamme de concentrations, sont équivalentes et entendent signifier que les bornes de cette gamme sont incluses.

Conformément à l'invention, le nitrate ou chlorure métallique présent dans la solution aqueuse A4 peut notamment être un nitrate ou un chlorure d'un métal alcalino-terreux, d'un métal de transition, d'un lanthanide ou d'aluminium.

Parmi ceux-ci, préférence est donnée à un nitrate ou chlorure de calcium, de magnésium, de strontium, de zinc, de strontium, de fer ou d'aluminium, toute préférence étant donnée à un nitrate de calcium ou de magnésium.

Comme précédemment indiqué, à l'étape a), la solution aqueuse A1 doit présenter une molarité comprise entre M1 et M2 qui définissent la gamme de concentrations molaires en acide nitrique pour laquelle la résine échangeuse de cations retient le ruthénium sélectivement par rapport au technétium.

Aussi le procédé peut-il comprendre de plus, avant l'étape a), un ajustement de la molarité de la solution aqueuse A1 pour amener, si nécessaire, cette molarité à une valeur comprise entre M1 et M2, cet ajustement pouvant être réalisé :
- soit par dilution de la solution aqueuse A1, avantageusement par de l'acide nitrique très faiblement concentré, si cette solution a une concentration molaire en acide nitrique supérieure à M2 ;
- soit par ajout d'acide nitrique concentré à la solution aqueuse A1 si cette solution a une concentration molaire en acide nitrique inférieure à M1.

Conformément à l'invention, la résine échangeuse de cations peut être toute résine échangeuse de cations qui est capable de retenir le ruthénium sélectivement par rapport au technétium lorsqu'elle est mise en contact avec une solution aqueuse d'acide nitrique de molarité comprise entre M1 et M2 et dans laquelle ces deux éléments métalliques sont présents.

Cette résine peut notamment être une résine organique poreuse, composée d'une matrice poly(méth)acrylate ou polystyrénique, de préférence polystyrénique, réticulée et fonctionnalisée par des groupes acide sulfonique, -SO₃H.

Des résines de ce type sont, par exemple, la résine AG MP-50 de la société BioRad, les résines Dowex 50W-X8, Dowex^{™} Marathon C-10, Dowex^{™} HCR-W2, Dowex^{™} Monosphere^{™} C-400 de la société Dow, les résines AmberLite^{™} HPR1200 H, Amberlite^{™} IRN77 et Amberlite^{™} IR122 Na de la société DuPont, les résines Purolite^{™} C100E et Purolite^{™} C145 de la société Purolite, les résines Diaion^{™} PK208 et Diaion^{™} SK1B de la société Mitsubishi Chemical Corporation ou encore la résine Lewatit^{™} MonoPlus S 200 KR de la société Lanxess.

Parmi celles-ci, toute préférence est donnée à la résine AG MP-50 qui est formée d'un copolymère styrène/divinylbenzène porteur de groupes acide sulfonique.

Ces résines retiennent le ruthénium sélectivement par rapport au technétium lorsqu'elles sont mises en contact avec une solution aqueuse d'acide nitrique comprenant ces éléments métalliques et dont la concentration en acide nitrique se situe entre 0,01 mol/L et 0,5 mol/L, concentration à laquelle le ruthénium serait retenu par les résines sous la forme de complexes ruthénium-nitrosyle nitratés.

Auquel cas, les solutions aqueuses A1 et A2 comprennent, de préférence, de 0,01 mol/L à 0,5 mol/L et, mieux encore 0,1 mol/L d'acide nitrique.

Auquel cas également, l'étape c) visant à éluer le ruthénium de la résine échangeuse de cations est réalisée :
- soit avec une solution aqueuse A3 qui comprend avantageusement au moins 2 mol/L et, mieux encore, au moins 4 mol/L d'acide nitrique ou chlorhydrique, par exemple 6 mol/L d'acide nitrique ou chlorhydrique ;
- soit avec une solution aqueuse A4 qui comprend avantageusement de 0,01 mol/L à 0,5 mol/L d'acide nitrique ou chlorhydrique, par exemple 0,01 mol/L d'acide nitrique ou chlorhydrique, et au moins 1 mol/L et, mieux encore, au moins 2 mol/L du nitrate ou chlorure métallique.

Conformément à l'invention, l'étape b) comprend au moins un lavage de la résine échangeuse de cations avec une solution aqueuse A2 comprenant de l'acide nitrique comme la solution aqueuse A1.

Cette étape vise principalement à retirer de la résine échangeuse de cations et, notamment, de son volume interstitiel le technétium susceptible d'avoir été retenu par cette résine à l'étape a).

De ce fait, le ou les lavages de l'étape b) sont réalisés avec une solution aqueuse A2 d'acide nitrique dont la molarité, outre d'être comprise entre M1 et M2, est, de préférence, inférieure ou égale à la molarité que présente la solution aqueuse A1 à l'étape a).

Conformément à l'invention, le procédé peut comprendre, à l'issue de l'étape c), une purification complémentaire du ruthénium présent dans la solution aqueuse A5 afin de le débarrasser, si nécessaire, des impuretés métalliques susceptibles d'être encore présentes dans la solution aqueuse A5.

Cette purification complémentaire est avantageusement réalisée au moyen d'une résine organique chélatante.

Cette résine peut, en premier lieu, être une résine comprenant un diglycolamide comme agent chélatant, la résine pouvant être une résine imprégnée du diglycolamide ou une résine sur laquelle est greffé le diglycolamide.

On rappelle que le terme « diglycolamide » désigne une famille de composés de formule (I) ou de formule (II) ci-après :

R¹(R²)N-C(O)-CH₂-O-CH₂-C(O)-N(R³)R⁴ (I)

R¹(R²)N-C(O)-CH₂-O-CH₂-COOH (II)

dans laquelle R¹, R², R³ et R⁴ sont typiquement des groupes alkyles linéaires ou ramifiés.

La résine comprenant le diglycolamide est, de préférence, une résine composée d'une matrice poly(méth)acrylate ou polystyrénique, de préférence polystyrénique, réticulée et imprégnée d'un diglycolamide lipophile, c'est-à-dire un diglycolamide qui comprend au moins 24 atomes de carbone, tel que le *N,N,N',N'*-tétra-*n*-octyl-3-oxapentanediamide (ou TODGA), le *N,N,N',N'*-tétra(2-éthylhexyl)-3-oxapentanediamide (ou TEHDGA), le *N,N,N',N'*-tétra-*n*-décyl-3-oxapentane-diamide (ou TDDGA) ou encore le *N,N,N',N'*-tétra-*n*-dodécyl-3-oxapentanediamide (ou TdDDGA).

Une résine de ce type est notamment la résine DGA N (pour Normal) de la société Triskem, qui est formée d'un copolymère styrène/divinylbenzène imprégné de TODGA et qui est disponible sous forme de particules conditionnées en flacons mais aussi sous forme de colonnes, ou cartouches, de chromatographie prêtes à l'emploi.

Si une telle résine organique chélatante est utilisée, alors la purification complémentaire du ruthénium comprend préférentiellement au moins les étapes successives suivantes :
d) une extraction du ruthénium de la solution aqueuse A5, cette extraction comprenant une mise en contact, dans une colonne de chromatographie, de la résine organique chélatante avec la solution aqueuse A5, la solution aqueuse A5 comprenant au plus 4 mol/L d'acide nitrique ou chlorhydrique et, éventuellement, de 0,45 mol/L à 4 mol/L d'une base aminée ;
e) au moins un lavage de la résine organique chélatante avec une solution aqueuse A6 comprenant au plus 4 mol/L d'acide nitrique ou chlorhydrique et, éventuellement, de 0,45 mol/L à 4 mol/L de la base aminée ; et
f) une élution du ruthénium de la résine organique chélatante avec une solution aqueuse A7 comprenant au moins 0,01 mol/L d'acide nitrique ou chlorhydrique.

En variante, la résine organique chélatante peut également être une résine comprenant une bipyridine ou une phénanthroline comme agent chélatant, la résine pouvant être une résine imprégnée de la bipyridine ou de la phénanthroline ou une résine sur laquelle est greffée la bipyridine ou la phénanthroline.

On rappelle que le terme « bipyridine » désigne une famille de composés formés à partir de deux pyridines reliées l'une à l'autre par une liaison covalente tandis que le terme « phénanthroline » désigne une famille de composés formés à partir de trois cycles aromatiques condensés dont les deux cycles opposés contiennent chacun un atome d'azote se faisant mutuellement face.

Une résine organique comprenant ce type d'agent chélatant peut notamment être obtenue en imprégnant une résine adsorbante, à matrice poly(mét)acrylate ou polystyrénique réticulée, de la bipyridine ou de la phénanthroline. Une résine adsorbante susceptible d'être ainsi imprégnée est, par exemple, la résine Amberlite^{™} XAD4 de la société DuPont, qui est constituée d'un copolymère styrène/divinylbenzène.

Auquel cas :
- la bipyridine dont est imprégnée la résine peut notamment être tout dérivé lipophile de la 2,2'-bipyridine, un tel dérivé étant typiquement une 2,2'-bipyridine substituée par un ou plusieurs groupes hydrocarbonés, par exemple alkyles ou phényles, telle que la 4,4'-dinonyl-2,2'-bipyridine, la 4,4'-diméthyl-2,2'-bipyridine, la 5,5'-diméthyl-2,2'-bipyridine, la 4,4'-di-tert-butyl-2,2'-bipyridine ou la 4,4'-diphényl-2,2'-bipyridine ; tandis que
- la phénanthroline dont est imprégnée la résine peut notamment être tout dérivé lipophile de la 1,10-phénanthroline, un tel dérivé étant typiquement une 1,10-phénanthroline substituée par un ou plusieurs groupes hydrocarbonés, par exemple alkyles ou phényles, telle que la 4-méthyl-1,10-phénanthroline, la 5-méthyl-1,10-phénanthroline, la 5,6-diméthyl-1,10-phénanthroline, la néocuproïne (ou 2,9-diméthyl-1,10-phénanthroline), la bathocuproïne (ou 2,9-diméthyl-4,7-diphényl-1,10-phénanthroline) ou la bathophénanthroline (ou 4,7-diphényl-1,10-phénanthroline).

Parmi les bipyridines, préférence est donnée à la 4,4'-dinonyl-2,2'-bipyridine tandis que, parmi les phénanthrolines, préférence est donnée à la bathophénanthroline.

Si une telle résine organique chélatante est utilisée, alors la purification complémentaire du ruthénium comprend préférentiellement au moins les étapes successives suivantes :
d) une extraction du ruthénium de la solution aqueuse A5, cette extraction comprenant une mise en contact, dans une colonne de chromatographie, de la résine organique chélatante avec la solution aqueuse A5, la solution aqueuse A5 comprenant au plus 4 mol/L d'acide nitrique ou chlorhydrique et, éventuellement, de 0,45 mol/L à 4 mol/L d'une base aminée ;
e) au moins un lavage de la résine organique chélatante avec une solution aqueuse A6 comprenant au plus 4 mol/L d'acide nitrique ou chlorhydrique et, éventuellement, de 0,45 mol/L à 4 mol/L de la base aminée ; et
f) une élution du ruthénium de la résine organique chélatante avec une solution aqueuse A7 comprenant au moins 0,01 mol/L d'acide nitrique ou chlorhydrique.

En variante encore, la résine organique chélatante peut également être une résine comprenant une thiourée comme agent chélatant, la résine pouvant être, là encore, une résine imprégnée de la thiourée ou une résine sur laquelle est greffée la thiourée.

On rappelle que le terme « thiourée » désigne une famille de composés de formule : (R¹R²N)(R³R⁴N)C=S dans laquelle R¹, R², R³ et R⁴ sont typiquement des atomes d'hydrogène ou des groupes hydrocarbonés, notamment alkyles, éventuellement substitués par un ou plusieurs hétéroatomes tels qu'un ou plusieurs atomes de soufre, le composé le plus simple de cette famille étant la thiourée de formule (NH₂)₂C=S.

Une résine organique comprenant ce type d'agent chélatant peut notamment être obtenue en imprégnant une résine adsorbante, à matrice poly(mét)acrylate ou polystyrénique réticulée, telle que la résine Amberlite^{™} XAD4 précitée, de la thiourée.

Auquel cas, la thiourée dont est imprégnée la résine peut notamment être toute thiourée lipophile, une telle thiourée étant typiquement une thiourée comprenant au moins un groupe alkyle en C8 à C15 telle que la 1-dodécyl-3-méthylthiourée, la 1,3-dioctylthiourée, la 1-(2-(dodécylthio)éthyl)-3-méthylthiourée, la 1-méthyl-3-(2-(nonyl-thio)éthyl)thiourée, la 1-méthyl-3-(2-(octylthio)éthyl)thiourée, la 1-(2-(dodécylthio)-éthyl)-3-éthylthiourée ou la 1-(2-(dodécylthio)éthyl)-3-propylthiourée.

Parmi ces thiourées, préférence est donnée à la 1-(2-(dodécylthio)éthyl)-3-méthylthiourée.

Si une telle résine organique chélatante est utilisée, alors la purification complémentaire du ruthénium comprend préférentiellement au moins les étapes successives suivantes :
d) une extraction du ruthénium de la solution aqueuse A5, cette extraction comprenant une mise en contact, dans une colonne de chromatographie, de la résine organique chélatante avec la solution aqueuse A5, la solution aqueuse A5 comprenant au plus 4 mol/L d'acide nitrique ou chlorhydrique et, éventuellement, de 0,45 mol/L à 4 mol/L d'une base aminée ;
e) au moins un lavage de la résine organique chélatante avec une solution aqueuse A6 comprenant au plus 4 mol/L d'acide nitrique ou chlorhydrique et, éventuellement, de 0,45 mol/L à 4 mol/L de la base aminée ; et
f) une élution du ruthénium de la résine organique chélatante avec une solution aqueuse A7 comprenant de 0,5 mol/L à 2 mol/L de la thiourée de formule (NH₂)₂C=S et de 0,01 mol/L à 1 mol/L d'acide chlorhydrique.

Il va de soi que, si à l'étape c) du procédé, l'élution du ruthénium de la résine échangeuse de cations est réalisée avec une solution aqueuse A4 d'acide nitrique ou chlorhydrique comprenant un nitrate ou un chlorure métallique, alors la solution aqueuse A5, qui est soumise à l'une quelconque des purifications complémentaires, comprend également ce nitrate ou chlorure métallique. Auquel cas, il est possible d'utiliser, pour le lavage de l'étape e) de ces purifications, une solution aqueuse A6 qui comprend, outre de l'acide nitrique ou chlorhydrique et, éventuellement, la base aminée, un nitrate ou un chlorure métallique identique à celui présent dans la solution aqueuse A5.

Par ailleurs, si à l'étape c) du procédé, l'élution du ruthénium de la résine échangeuse de cations est réalisée avec une solution aqueuse A3 ou A4 d'acide nitrique ou chlorhydrique de molarité supérieure à 4, alors le procédé comprend de plus, entre cette étape c) et l'étape d) de l'une quelconque des purifications complémentaires, une dilution de la solution aqueuse A5 pour amener sa concentration en acide nitrique ou chlorhydrique à une valeur d'au plus 4 mol/L ainsi qu'un ajout éventuel de la base aminée pour réduire partiellement son acidité tout en lui conservant une teneur élevée en nitrates ou chlorures si ceux-ci sont présents.

Comme connu en soi, la base aminée peut être tout composé comprenant un ou plusieurs atomes d'azote susceptibles de capter un proton en milieu aqueux comme l'ammoniac, la guanidine, une alkylamine telle que la méthylamine, la diméthylamine, la triméthylamine, l'éthylamine, la diéthylamine ou la triéthylamine, ou encore un composé à cycle azoté tel que la pyridine, l'imidazole ou l'histidine, étant entendu qu'il convient que la base aminée utilisée soit soluble dans l'eau.

Parmi ces bases, préférence est donnée à la triéthylamine.

Conformément à l'invention, la solution aqueuse A1 est, de préférence, une solution issue de la dissolution dans l'acide nitrique d'une cible de technétium-99 ayant été irradiée par des protons et, plus spécifiquement, par une réaction nucléaire ⁹⁹Tc(p,3n)⁹⁷Ru dans la plage d'énergie des protons de 20 MeV à 100 MeV.

Auquel cas, la solution aqueuse A1 comprend du ruthénium-97, du technétium-97 et, comme impureté métallique, du molybdène-97, typiquement dans un rapport massique du technétium au ruthénium allant de 2x10⁴ à 10⁶, et dans un rapport massique du technétium au molybdène allant de 4x10⁵ à 2x10⁷.

L'invention a également pour objet un procédé de production de ruthénium-97 à partir d'une cible de technétium-99 ayant été irradiée par des protons, qui comprend au moins les étapes suivantes :
i) la préparation d'une solution aqueuse A1 d'acide nitrique comprenant du ruthénium à une concentration C1, du technétium à une concentration C2 au moins 10 fois supérieure à C1, et des impuretés métalliques par dissolution de la cible dans l'acide nitrique ; et
ii) une purification du ruthénium-97 présent dans la solution aqueuse A1 par la mise en œuvre d'un procédé de purification tel que précédemment défini.

D'autres caractéristiques et avantages de l'invention apparaîtront à la lecture du complément de description qui suit et qui se rapporte à des exemples ayant permis de valider expérimentalement le procédé de purification de l'invention.

Il va de soi que ce complément de description n'est donné qu'à titre d'illustration de l'objet de l'invention et ne constitue en aucun cas une limitation de cet objet.

### Brève description des figures

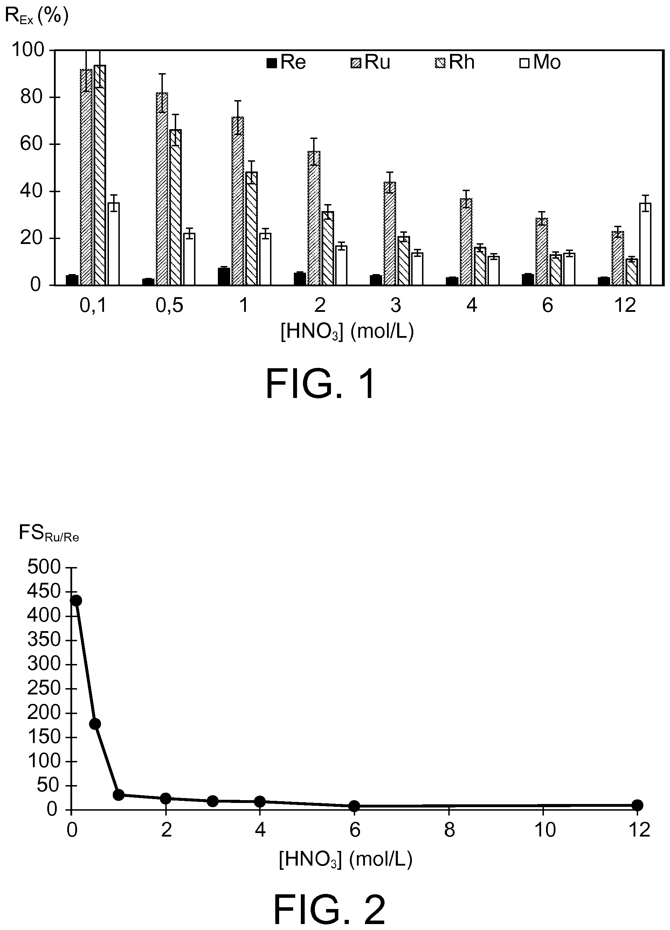

La figure 1 illustre, sous la forme d'histogrammes, les rendements d'extraction, notés R_{EX} et exprimés en %, du ruthénium, du rhénium (simulant le technétium), du rhodium et du molybdène tels qu'obtenus lors de tests d'extraction ayant été réalisés par mise en contact, dans des tubes de centrifugation, des solutions aqueuses simulant une solution de dissolution dans l'acide nitrique d'une cible de technétium irradiée avec une résine échangeuse de cations ; ces rendements d'extraction sont exprimés en fonction de la concentration en acide nitrique, notée [HNO₃] et exprimée en mol/L, des solutions aqueuses.
La figure 2 illustre, sous la forme d'une courbe, l'évolution du facteur de séparation entre le ruthénium et le rhénium, noté FS_{Ru/Re}, en fonction de la concentration en acide nitrique, notée [HNO₃] et exprimée en mol/L, telle qu'obtenue lors de tests d'extraction ayant été réalisés par mise en contact, dans des tubes de centrifugation, des solutions aqueuses simulant une solution de dissolution dans l'acide nitrique d'une cible de technétium irradiée avec une résine échangeuse de cations.

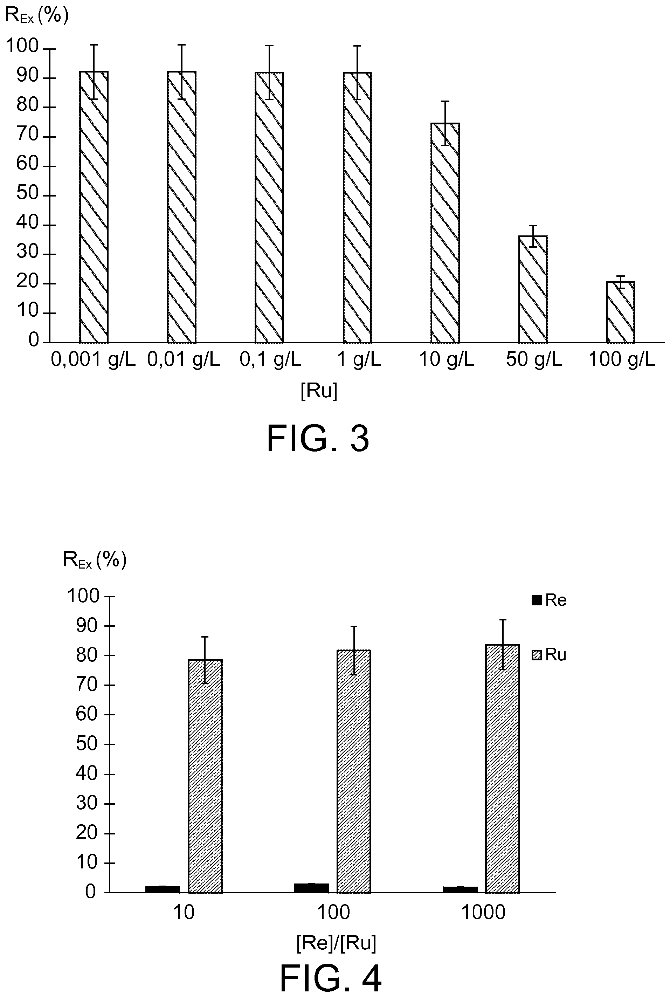

La figure 3 illustre, sous la forme d'histogrammes, les rendements d'extraction, notés R_{EX} et exprimés en %, du ruthénium tels qu'obtenus lors de tests d'extraction ayant été réalisés par mise en contact, dans des tubes de centrifugation, des solutions aqueuses comprenant du ruthénium à des concentrations allant de 1 mg/L à 100 g/L de ruthénium et 0,5 mol/L d'acide nitrique ; ces rendements d'extraction sont exprimés en fonction de la concentration en ruthénium des solutions aqueuses, notée [Ru] et exprimée en g/L.
La figure 4 illustre, sous la forme d'histogrammes, les rendements d'extraction, notés R_{EX} et exprimés en %, du ruthénium et du rhénium tels qu'obtenus lors de tests d'extraction ayant été réalisés par mise en contact, dans des tubes de centrifugation, des solutions aqueuses présentant une concentration en rhénium 10 fois, 100 fois et 1000 fois supérieure à leur concentration en ruthénium et comprenant 0,5 mol/L d'acide nitrique ; ces rendements d'extraction sont exprimés en fonction du rapport des concentrations en rhénium et ruthénium, noté [Re]/[Ru].

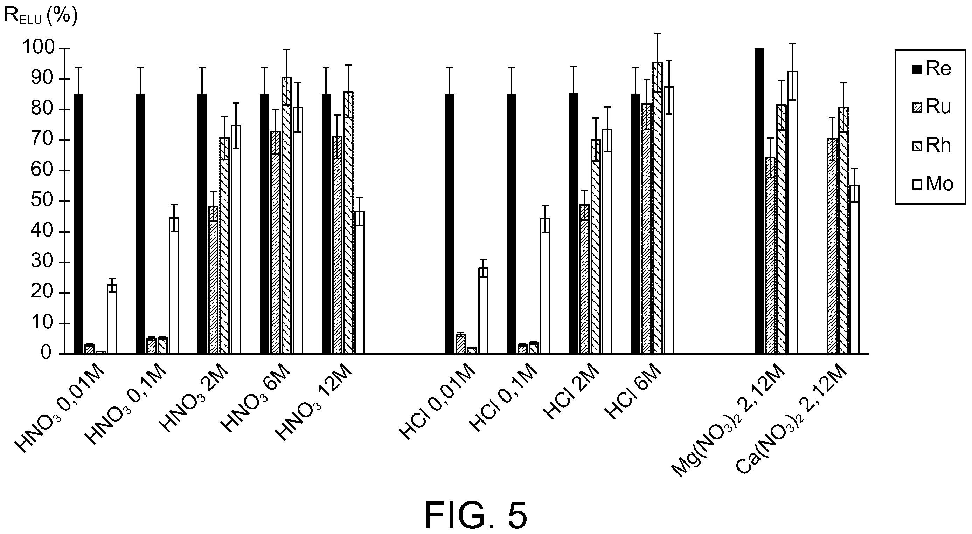

La figure 5 illustre, sous la forme d'histogrammes, les rendements d'élution, notés R_{ELU} et exprimés en %, du ruthénium, du rhénium, du rhodium et du molybdène tels qu'obtenus lors de tests d'élution ayant été réalisés par mise en contact, dans des tubes de centrifugation, différents types de solutions d'élution avec des résines échangeuses de cations préalablement chargées en ces éléments métalliques.

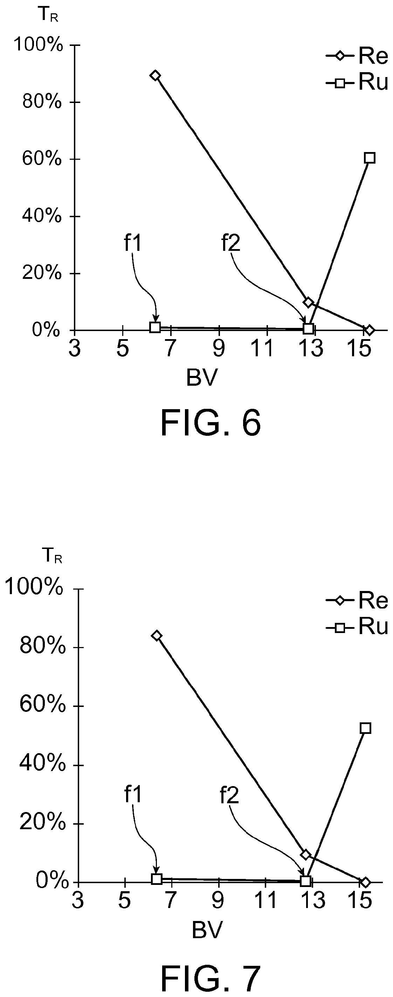

La figure 6 illustre l'évolution des taux de récupération, notés T_{R} et exprimés en %, du ruthénium et du rhénium tels qu'obtenus dans un test visant à purifier le ruthénium à partir d'une solution aqueuse comprenant 1 g/L de rhénium, 0,1 g/L de ruthénium et 0,1 mol/L d'acide nitrique au moyen d'une colonne contenant une résine échangeuse de cations ; ces taux de récupération sont exprimés en fonction du nombre de volumes de lit, notés BV, utilisés au cours de ce test ; la flèche f1 indique le début du lavage de la résine subséquent à son chargement avec la solution aqueuse tandis que la flèche f2 indique le début de l'élution du ruthénium de la résine.
La figure 7 est une figure similaire à la figure 6 mais pour un test de purification du ruthénium ne se différenciant du précédent que par la nature de la solution utilisée pour éluer le ruthénium de la résine.

### Exposé détaillé de modes de mise en œuvre particuliers

Dans ce qui suit :
- le *rendement d'extraction* d'un élément métallique, noté R_{EXT} et exprimé en %, correspond au rapport de la quantité de l'élément métallique ayant été retenue par une résine sur la quantité de cet élément métallique qui était présente dans une solution avant passage de cette solution sur cette résine ;
- le *rendement d'élution* d'un élément métallique, noté R_{ELU} et exprimé en %, correspond au rapport de la quantité de l'élément métallique ayant été éluée d'une résine sur la quantité de cet élément métallique ayant été préalablement retenue par cette résine ;
- le *coefficient de distribution* d'un élément métallique, noté K_{d} et exprimé en mL/g, correspond au rapport de la concentration de l'élément métallique ayant été retenue par une résine (par gramme de résine sèche) sur la concentration de cet élément métallique resté dans une solution (par millilitre de solution) après passage de cette solution sur la résine ;

- le *taux de récupération* d'un élément métallique, noté TR et exprimé en %, correspond au rapport de la quantité de l'élément métallique ayant été éluée d'une résine sur la quantité de cet élément métallique qui était présente dans une solution avant passage de cette solution sur la résine ;
- le *facteur de séparation* entre deux éléments métallique M1 et M2, noté FS_{M1/M2} et sans unité, correspond au rapport entre les coefficients de distribution des deux éléments métalliques ;
- le *facteur de décontamination* d'un élément métallique M1 vis-à-vis d'un élément métallique M2, noté FD_{M1/M2} et sans unité, correspond au rapport du ratio des concentrations des deux éléments métalliques dans une solution avant purification(s) sur le ratio des concentrations des deux éléments métalliques dans la solution après purification(s).

Toutes les valeurs données ci-après sont exprimées avec une incertitude relative de 10 % qui regroupe les différentes incertitudes expérimentales et analytiques.

Par ailleurs, dans les tests qui sont rapportés ci-après le technétium a été remplacé, pour des questions de radioprotection des expérimentateurs, par du rhénium dont le comportement simule celui du technétium comme largement décrit dans l'état de la technique.

### Exemple 1 : Purification du ruthénium en batch au moyen d'une résine échangeuse de cations

Le présent exemple se rapporte à des tests d'extraction du ruthénium par une résine échangeuse de cations et d'élution de cet élément métallique de cette résine qui sont tous réalisés en batch, dans des tubes de centrifugation.

La résine échangeuse de cations est la résine AG MP-50 de BioRad.

Les tubes de centrifugation sont équipés d'un insert avec un filtre en polytétrafluoroéthylène (PTFE) de 0,2 µm de porosité de sorte que la mise en contact de la résine avec la solution aqueuse soumise à l'extraction ou utilisée pour l'élution puis leur séparation par filtration puissent être effectuées dans le même tube par simple centrifugation.

### 1.1 - Influence de la concentration en acide nitrique sur le rendement d'extraction du ruthénium

On réalise une première série de tests visant à extraire par la résine échangeuse de cations le ruthénium de solutions aqueuses qui comprennent toutes 1 g/L de rhénium, 0,1 g/L de ruthénium, 0,1 g/L de rhodium et 0,1 g/L de molybdène mais diffèrent les unes des autres par leur concentration en acide nitrique qui va de 0,1 mol/L à 12 mol/L.

Ces solutions sont préparées par dilution d'acide perrhénique, HReO₄, de nitrate de nitrosyle de ruthénium(III), Ru(NO)(NO₃)₃, et de nitrate de rhodium(III), Rh(NO₃)₃, en solution et par dissolution de trioxyde de molybdène hydraté, MoO₃•H₂O, dans l'acide nitrique.

Chaque test consiste à mettre en contact, dans l'un des tubes de centrifugation, 700 µL de l'une des solutions aqueuses avec 100 mg de la résine humide (soit environ 48 mg de résine sèche), à agiter le tube (sur ThermoMixer^{™}) pendant 30 minutes à 1500 tr/min et 25°C, puis à séparer la solution aqueuse par centrifugation pendant 5 minutes à 14 500 tr/min.

La solution aqueuse ainsi récupérée est analysée par spectrométrie d'émission atomique par plasma à couplage inductif (ICP-AES) pour déterminer sa concentration en chacun des quatre éléments métalliques restés en solution après extraction.

Les bilans matière sont vérifiés par minéralisation de la résine, c'est-à-dire digestion dans un réacteur micro-ondes où elle est mise en solution dans 8 mL d'un mélange HNO₃/H₂O₂ 1:1 (v/v) et chauffée pendant 1 heure à 200 °C. La solution ainsi obtenue est revolumée puis également analysée par ICP-AES.

Les résultats sont illustrés sur les figures 1 et 2, respectivement en termes de rendements d'extraction, R_{EX}, obtenus pour les quatre éléments métalliques et d'évolution du facteur de séparation entre le ruthénium et le rhénium, FS_{Ru/Re}, en fonction de la concentration en acide nitrique présentée par les solutions aqueuses avant leur mise en contact avec la résine.

La figure 1 montre qu'avec le type de résine échangeuse de cations utilisée, une faible concentration en acide nitrique favorise l'extraction du ruthénium tandis que le rhénium n'est pratiquement pas extrait et ce, quelle que soit la concentration en acide nitrique.

Ainsi et comme visible sur la figure 2, les meilleurs facteurs de séparation entre le ruthénium et le rhénium, FS_{Ru/Re}, sont obtenus pour des concentrations en acide nitrique de 0,1 mol/L ou 0,5 mol/L.

Notamment, pour une concentration en acide nitrique de 0,1 mol/L, le rendement d'extraction du ruthénium est supérieur à 90 %, ce qui correspond à un coefficient de distribution de 260 mL/g.

Le facteur de séparation FS_{Ru/Re} obtenu dans ces conditions est de 432, ce qui traduit une bonne séparation entre le ruthénium et le rhénium.

Ce facteur de séparation est susceptible d'être encore amélioré en procédant, à l'issue de l'extraction, à un lavage de la résine au moyen d'une solution aqueuse faiblement concentrée en acide nitrique, comprenant par exemple de 0,01 mol/L à 0,5 mol/L d'acide nitrique, de préférence 0,1 mol/L (voir point 1.5 ci-après).

Une sélectivité d'extraction du ruthénium n'est cependant pas observée vis-à-vis du rhodium et du molybdène qui sont tous deux également extraits par la résine échangeuse de cations, le premier en quantités comparables à celles du ruthénium et le deuxième dans une moindre mesure.

### 1.2 - Influence de la concentration en ruthénium sur le rendement d'extraction de cet élément métallique

On réalise une deuxième série de tests en vue d'apprécier l'influence de la concentration en ruthénium que présente la solution aqueuse dont on souhaite l'extraire sur son rendement d'extraction par la résine échangeuse de cations.

Ces tests sont réalisés en suivant un protocole opératoire analogue à celui décrit au point 1.1 ci-avant mais en utilisant des solutions aqueuses comprenant de 1 mg/L à 100 g/L de ruthénium (apporté sous forme de Ru(NO)(NO₃)₃) et 0,5 mol/L d'acide nitrique.

Les rendements d'extraction, R_{EX}, du ruthénium ainsi obtenus sont illustrés sur la figure 3.

Comme le montre cette figure, le rendement d'extraction du ruthénium est constant et supérieur à 90 % pour des concentrations en ruthénium inférieures ou égales à 1 g/L.

L'isotherme obtenu suit le modèle de Langmuir, caractéristique d'une adsorption monocouche et homogène du ruthénium sur la surface des particules de la résine.

### 1.3 - Influence du rapport des concentrations Re/Ru sur le rendement d'extraction du ruthénium

On réalise une troisième série de tests en vue d'apprécier l'influence du rapport des concentrations en rhénium et en ruthénium que présente une solution aqueuse dont on souhaite extraire le ruthénium sur son rendement d'extraction par la résine échangeuse de cations.

Ces tests sont réalisés en suivant un protocole opératoire similaire à celui décrit au point 1.1 ci-avant mais en utilisant des solutions aqueuses présentant une concentration en rhénium (apporté sous forme d'HReO₄) 10 fois, 100 fois et 1000 fois supérieure à leur concentration en ruthénium (apporté sous forme de Ru(NO)(NO₃)₃) et comprenant 0,5 mol/L d'acide nitrique.

Les rendements d'extraction, R_{EX}, du ruthénium ainsi obtenus sont illustrés sur la figure 4.

Comme le montre cette figure, le rapport des concentrations en rhénium et en ruthénium n'a que peu d'influence sur le rendement d'extraction du ruthénium qui reste quasi constant indépendamment de l'excès de rhénium présent en solution.

Ces résultats présentent un intérêt tout particulier pour une application du procédé de l'invention à la purification du ruthénium produit par l'irradiation d'une cible de technétium car, dans ce cas, la concentration du technétium dans la solution issue de la dissolution de la cible dans l'acide nitrique peut aller jusqu'à 100 000 fois celle du ruthénium.

### 1.4 - Élution du ruthénium de la résine échangeuse de cations

Après avoir réalisé une série d'extractions telles que décrites au point 1.1 ci-avant, à partir de solutions aqueuses comprenant 1 g/Lde rhénium, 0,1 g/L de ruthénium, 0,1 g/L de rhodium, 0,1 g/L de molybdène et 0,1 mol/L ou 0,5 mol/L d'acide nitrique, on soumet les résines ainsi chargées en éléments métalliques (Ru, Rh, Mo et traces de Re comme illustré sur la figure 1) à une élution.

Pour ce faire, 700 µL d'une solution d'élution sont ajoutés dans les tubes de centrifugation dans lesquels se trouvent les résines chargées en éléments métalliques pour une mise en contact dans les mêmes conditions opératoires que celles décrites au point 1.1 ci-avant (30 minutes, 1 500 tr/min, 25 °C), puis les solutions d'élution sont séparées par centrifugation pendant 5 minutes à 14 500 tr/min.

Les solutions d'élution et les résines ainsi séparées sont analysées par ICP-AES (après minéralisation des résines comme décrit au point 1.1 ci-avant).

Les solutions d'élution testées sont :
- des solutions aqueuses comprenant de 0,01 mol/L à 12 mol/L d'acide nitrique ou de 0,01 mol/L à 6 mol/L d'acide chlorhydrique pour les extractions ayant été réalisées à partir de solutions aqueuses comprenant 0,1 mol/L d'acide nitrique, et
- des solutions aqueuses comprenant 2,12 mol/L de nitrate de magnésium, Mg(NO₃)₂, ou de calcium, Ca(NO₃)₂, et 0,01 mol/L d'acide nitrique pour les extractions ayant été réalisées à partir de solutions aqueuses comprenant 0,5 mol/L d'acide nitrique.

Les rendements d'élution, R_{ELU}, ainsi obtenus sont illustrés sur la figure 5.

Cette figure montre que l'utilisation d'une solution aqueuse d'acide nitrique ou chlorhydrique fortement concentrée (à 6 mol/L ou plus d'HNO₃ ou d'HCl) comme solution d'élution conduit à une récupération très satisfaisante du ruthénium (70 % à 80 % du ruthénium préalablement extrait) mais sans être sélective vis-à-vis du rhodium et du molybdène.

Elle montre que l'utilisation d'une solution aqueuse d'un nitrate métallique comme solution d'élution conduit également à une bonne récupération du ruthénium (64 % et 70 % du ruthénium préalablement extrait pour le nitrate de magnésium et le nitrate de calcium respectivement) mais, là également, sans sélectivité vis-à-vis du rhodium et du molybdène.

Par contre, l'utilisation d'une solution aqueuse d'acide nitrique ou chlorhydrique faiblement concentrée (à 0,01 mol/L ou 0,1 mol/L d'HNO₃ ou d'HCl par exemple) conduit, elle, à une récupération quantitative du rhénium préalablement extrait (> 85 % mais difficilement dosable en raison de la très faible quantité de rhénium préalablement extraite et donc éluée ensuite) et d'une partie du molybdène (jusqu'à 45 % du molybdène ayant été préalablement extrait) tout en limitant la fuite du ruthénium de la résine (avec un maximum de 5 % de ruthénium élué). Une telle solution d'acide nitrique ou chlorhydrique faiblement concentrée peut donc être utilisée pour laver la résine échangeuse de cations afin de la débarrasser des traces résiduelles de technétium (simulé ici par le rhénium) ainsi que de la majorité du molybdène ayant été préalablement extrait avant d'éluer le ruthénium de la résine.

### 1.5 - Simulation d'une purification du ruthénium à partir d'une solution issue de la dissolution d'une cible de technétium irradiée par des protons

On réalise un test dans des conditions, notamment en ce qui concerne la composition de la solution aqueuse à partir de laquelle le ruthénium doit être purifié ainsi que l'enchaînement des étapes, proches de celles d'une mise en œuvre du procédé de l'invention pour la purification du ruthénium à partir d'une solution de dissolution dans l'acide nitrique d'une cible de technétium ayant été irradiée par des protons.

De ce fait, il est procédé dans ce test à une étape d'extraction du ruthénium par la résine échangeuse de cations, une étape de lavage de cette résine et une étape d'élution du ruthénium de ladite résine.

L'étape d'extraction du ruthénium est réalisée en mettant 700 µL d'une solution aqueuse comprenant 10 g/L de rhénium (apporté sous forme d'HReO₄), 1 g/L de ruthénium (apporté sous forme de Ru(NO)(NO₃)₃), 40 mg/L de molybdène (apporté sous forme de MoO₃•H₂O) et 0,1 mol/L d'acide nitrique en contact avec 100 mg de la résine, en agitant le tube pendant 30 minutes à 1 500 tr/min et 25 °C, puis en séparant la solution par centrifugation pendant 5 minutes à 14 500 tr/min.

L'étape de lavage de la résine est réalisée en mettant, deux fois successivement, 700 µL d'une solution aqueuse comprenant 0,1 mol/L d'acide nitrique en contact avec la résine avec, pour chaque contact, une agitation du tube pendant 5 minutes à 1 500 tr/min et 25 °C, puis en séparant, à l'issue de chaque contact, la solution de lavage par centrifugation pendant 5 minutes à 14 500 tr/min.

Quant à l'étape d'élution du ruthénium, elle est réalisée en mettant 700 µL d'une solution comprenant 500 g/L de nitrate de calcium et 0,01 mol/L d'acide nitrique en contact avec la résine, en agitant le tube pendant 30 minutes à 1 500 tr/min et 25 °C, puis en filtrant la solution d'élution par centrifugation pendant 5 minutes à 14 500 tr/min.

Toutes les solutions issues des filtrations sont dosées par ICP-AES.

La solution obtenue à l'issue de l'élution comprend 527 mg/L de ruthénium, 0,3 mg/L de rhénium et 0,96 mg/L de molybdène, ce qui correspond à :
- un coefficient de distribution K_{d} du ruthénium de 578 mL/g,
- des facteurs de décontamination FD_{Ru/Re} de 16 870 et FD_{Ru/Mo} de 23, et
- une récupération de 50 % de la quantité de ruthénium présente dans la solution aqueuse de départ pour une pureté finale du ruthénium de 99,76 % en un seul étage de contact.

### Exemple 2 : Purification du ruthénium en continu au moyen d'une résine échangeuse de cations

Le présent exemple se rapporte à deux tests visant à purifier le ruthénium au moyen d'une résine échangeuse de cations et qui sont réalisés en continu, dans une colonne de chromatographie. Les deux tests ne diffèrent l'un de l'autre que par la solution utilisée pour éluer le ruthénium de la résine.

La résine échangeuse de cations est la résine AG MP-50 de BioRad.

La colonne est une colonne en verre de 1 cm de diamètre et 15 cm de hauteur, avec une double enveloppe qui est connectée à un bain thermostaté. Elle est équipée de deux verres frittés dont l'un est situé à sa base et l'autre est ajouté au-dessus de la résine après remplissage de la colonne par cette dernière. Elle est également équipée d'un réservoir et d'un robinet, respectivement en tête et en pied de colonne.

La colonne est préparée par introduction en tête de colonne d'une suspension aqueuse comprenant 5 g de résine dans l'acide nitrique à 0,1 mol/L. Une fois tassé par gravité, le lit de résine se dépose sur une hauteur de 10 cm, ce qui correspond à un volume de colonne, ou volume de lit plus simplement appelé BV (de *Bed Volume),* de 7,85 mL.

Puis la résine est conditionnée par un lavage avec quelques mL d'une solution aqueuse comprenant 0,1 mol/L d'acide nitrique.

Une fois la colonne prête, 50 mL d'une solution aqueuse comprenant 1 g/L de rhénium (apporté sous forme d'HReO₄), 0,1 g/L de ruthénium (apporté sous forme de Ru(NO)(NO₃)₃) et 0,1 mol/L d'acide nitrique sont introduits en tête de colonne. On laisse la solution aqueuse s'écouler de la colonne par gravité à température ambiante. Une fois cette solution récupérée en pied de colonne, elle est revolumée dans une fiole jaugée de 50 mL et analysée par ICP-AES pour déterminer sa teneur en chacun des deux éléments métalliques.

La résine est ensuite lavée avec 50 mL d'une solution aqueuse comprenant 0,1 mol/L d'acide nitrique que l'on laisse à son tour s'écouler par gravité et qui est ensuite récupérée en pied de colonne et analysée par ICP-AES.

Puis, la colonne est chauffée à 60 °C par circulation d'eau dans la double enveloppe et 20 mL d'une solution d'élution, préalablement chauffée à 60 °C, sont introduits dans la colonne.

Pour le premier test, la solution d'élution est une solution aqueuse qui comprend 6 mol/L d'acide nitrique tandis que, pour le second, la solution d'élution est solution aqueuse qui comprend soit 2,12 mol/L de nitrate de magnésium et 0,01 mol/L d'acide nitrique.

Dans les deux cas, après élution d'un volume de colonne (i.e. de 7,85 mL), l'écoulement de la solution d'élution est stoppé pendant une heure, puis on laisse le reste de la solution d'élution s'écouler. L'ensemble de la solution d'élution récupérée en pied de colonne est revolumé dans une fiole jaugée de 25 mL puis analysé par ICP-AES.

Les figures 6 et 7 illustrent l'évolution des taux de récupération, notés T_{R} et exprimés en %, du ruthénium et du rhénium, ainsi obtenus en fonction du nombre de volumes de lit, notés BV, utilisés, la figure 6 correspondant au premier test et la figure 7 correspondant au second.

Sur ces figures, la flèche f1 indique le début du lavage de la résine subséquent à son chargement avec la solution aqueuse comprenant le rhénium et le ruthénium tandis que la flèche f2 indique le début de l'élution du ruthénium.

Ces figures montrent que la récupération du ruthénium à l'issue de son élution de la résine est très satisfaisante pour les deux tests avec des taux de récupération de 61 % et 53 % respectivement.

La purification du ruthénium vis-à-vis du rhénium (et, donc, du technétium) est également très satisfaisante pour les deux tests avec des FD_{Ru/Re} de 418 et de 808 respectivement.

### Exemple 3 : Purification complémentaire du ruthénium au moyen d'une résine organique chélatante

### 3.1 -Purification du ruthénium en batch au moyen d'une résine organique chélatante comprenant une bipyridine ou une phénanthroline

On réalise des tests visant à apprécier la possibilité de parfaire la purification du ruthénium ayant été préalablement soumis à une purification au moyen d'une résine échangeuse de cations en utilisant une résine organique chélatante comprenant une bipyridine ou une phénanthroline.

La bipyridine est la 4,4'-dinonyl-2,2'-bipyridine tandis que la phénanthroline est la bathophénanthroline, ces deux composés étant disponibles auprès de Sigma-Aldrich.

La résine comprenant la bipyridine - dénommée ci-après DNPB - et la résine comprenant la phénanthroline - dénommée ci-après BPhen - sont préalablement préparées en imprégnant la résine adsorbante Amberlite^{™} XAD4 (DuPont) de 4,4'-dinonyl-2,2'-bipyridine pour la première et de bathophénanthroline pour la seconde, dans un rapport d'environ 1,15 mmol/g de résine sèche.

Pour ce faire, la résine adsorbante est tout d'abord lavée à l'eau puis à l'éthanol, puis séchée pendant quelques heures. Puis, 500 mg de résine sèche sont mélangés dans un ballon avec 0,573 mmol de 4,4'-dinonyl-2,2'-bipyridine (i.e. 234 mg) ou de bathophénanthroline (i.e. 191 mg) et 15 mL de dichlorométhane. Le mélange est agité pendant une nuit puis le solvant est évaporé lentement à l'évaporateur rotatif. Juste avant la fin de l'évaporation, 10 mL de dichlorométhane sont ajoutés dans le milieu et évaporés de la même façon jusqu'au séchage. Les résines DNPB et BPhen ainsi obtenues sont ensuite placées pendant une nuit au dessiccateur sous vide poussé pour éliminer toute trace de solvant.

Préalablement aux tests, les résines sont conditionnées par contact pendant 1 heure avec une solution aqueuse comprenant 2 mol/L d'acide nitrique et 1,95 mol/L de triéthylamine.

Les tests sont réalisés avec une solution aqueuse comprenant 10 mg/L de ruthénium (apporté sous forme de Ru(NO)(NO₃)₃), 10 mg/L de rhénium (apporté sous forme d'acide perrhénique), 10 mg/L de molybdène (apporté sous forme de MoO₃•H₂O) et 2 mol/L d'acide nitrique.

Chaque test comprend une extraction du ruthénium de la solution aqueuse par l'une des résines DNPB et BPhen suivie d'une élution du ruthénium de cette résine.

L'extraction du ruthénium consiste à mettre en contact, dans un tube de centrifugation à insert tel que décrit dans l'exemple 1 ci-avant, 700 µL de la solution aqueuse avec 50 mg de l'une des résines, à agiter le tube (sur ThermoMixer^{™}) pendant 24 heures à 1 500 tr/min, puis à séparer la solution aqueuse par centrifugation pendant 5 minutes à 14 500 tr/min.

L'élution du ruthénium est, elle, réalisée en mettant en contact 700 µL d'une solution aqueuse comprenant 10 mol/L d'acide chlorhydrique avec la résine, en agitant le tube pendant 24 heures à 1 500 tr/min et 25°C, puis en filtrant la solution d'élution par centrifugation pendant 5 minutes à 14 500 tr/min.

Toutes les solutions issues des filtrations sont analysées par ICP-AES.

Ces analyses montrent que, dans ces conditions, les deux résines conduisent à des résultats similaires. En effet, quelle que soit la résine testée, seuls le ruthénium et le molybdène sont extraits par cette résine, le rhodium restant en solution au cours de l'extraction. Le rendement d'extraction du ruthénium est très satisfaisant puisqu'il est de 60 % pour un seul contact solution/résine.

L'élution par l'acide chlorhydrique à 10 mol/L permet ensuite de récupérer le ruthénium sélectivement du molybdène qui, lui, reste fixé sur les résines.

Sont ainsi obtenus des facteurs de décontamination FD_{Ru/Mo} respectivement de 20 et 40 pour les résines DNPB et BPhen et un facteur de décontamination FD_{Ru/Rh} d'environ 30 pour les deux résines.

Il convient toutefois de noter que le fait que les tests soient réalisés en batch conjugué à l'absence de lavage intermédiaire de la résine a pour effet de diminuer grandement les facteurs de décontamination par rapport à ceux qui seraient obtenus en colonne de chromatographie et avec un lavage intermédiaire de la résine conformément au procédé de l'invention.

Il est donc possible au vu de ces résultats de parfaire la purification du ruthénium au moyen d'une résine organique chélatante comprenant une bipyridine ou une phénanthroline.

### 3.2 - Purification du ruthénium en batch au moyen d'une résine organique chélatante comprenant une thiourée

Un test similaire à celui qui vient d'être décrit est réalisé pour vérifier la possibilité de parfaire la purification du ruthénium ayant été préalablement soumis à une purification au moyen d'une résine échangeuse de cations en utilisant une résine organique chélatante comprenant une thiourée, dénommée ci-après MTU.

La thiourée est la 1-(2-(dodécylthio)éthyl)-3-méthylthiourée. Elle est préalablement synthétisée à partir de la 2-(dodécylthio)éthan-1-amine (1 éq) et du méthylisothiocyanate (1,1 éq). Pour ce faire, les deux réactifs sont mélangés pendant 5 heures à 45°C dans le dichlorométhane, puis le solvant est évaporé sous pression réduite et le produit est purifié sur colonne de silice par un gradient heptane/acétate d'éthyle. Un rendement de 74 % est obtenu pour cette synthèse. La pureté du produit est évaluée par spectroscopie par résonance magnétique nucléaire (ou RMN) du proton.

La résine MTU est préparée en imprégnant la résine adsorbante Amberlite^{™} XAD4 de 1-(2-(dodécylthio)éthyl)-3-méthylthiourée de la même façon que pour la préparation des résines BNPB et BPhen, à ceci près que l'imprégnation est réalisée sur 1 g de résine sèche avec 1,146 mmol de méthylthiourée (i.e. 281 mg).

Le test est réalisé avec une solution aqueuse comprenant 10 mg/L de ruthénium (apporté sous forme de Ru(NO)(NO₃)₃), 10 mg/L de rhénium (apporté sous forme d'acide perrhénique), 10 mg/L de molybdène (apporté sous forme de MoO₃•H₂O) et 2 mol/L d'acide nitrique.

Il comprend une extraction du ruthénium de la solution aqueuse par la résine MTU suivie d'une étape d'élution du ruthénium de cette résine.

Cette extraction et cette élution sont réalisées en suivant un protocole opératoire identique à celui décrit au point 3.1 ci-avant à ceci près que le ruthénium est élué avec une solution aqueuse comprenant 0,5 mol/L de la thiourée de formule NH₂)₂C=S et 0,01 mol/L d'acide chlorhydrique.

Toutes les solutions issues des filtrations sont analysées par ICP-AES.

Ces analyses montrent que, dans ces conditions, le ruthénium est extrait par la résine MTU tandis que le rhodium n'est pas du tout extrait et le molybdène ne l'est que très faiblement.

Elles montrent également que l'élution du ruthénium par la solution aqueuse de thiourée/HCl est peu sélective vis-à-vis du molybdène. Toutefois, cette faible sélectivité n'est pas pénalisante puisque le molybdène n'est que très faiblement extrait par la résine MTU.

La purification complémentaire du ruthénium vis-à-vis du molybdène réalisée au moyen de la résine MTU est tout à fait satisfaisante puisque le facteur de séparation FD_{Ru/Mo} obtenu est de 10 alors que, là également, le test n'a pas été réalisé dans des conditions les plus favorables (test en batch et absence de lavage intermédiaire de la résine).

### Exemple 4 : Simulation d'une purification du ruthénium à partir d'une solution issue de la dissolution d'une cible de technétium irradiée par des protons mettant en œuvre une résine échangeuse de cations et une résine organique chélatante comprenant un diglycolamide

Le présent exemple se rapporte à deux tests visant à purifier le ruthénium une première fois au moyen d'une résine échangeuse de cations et une deuxième fois au moyen d'une résine organique chélatante comprenant un diglycolamide.

Ces tests sont réalisés en batch dans des tubes de centrifugation tels que décrits au point 1 ci-avant et ne diffèrent l'un de l'autre que par la solution utilisée pour éluer le ruthénium de la résine organique chélatante.

La résine échangeuse de cations est la résine AG MP-50 de BioRad.

La résine organique chélatante est la résine DGA N (100-150 µm) de Triskem.

Le protocole opératoire est le suivant.
** Purification au moyen de la résine échangeuse de cations* :
   - Extraction du ruthénium par mise en contact de 700 µL d'une solution aqueuse comprenant 9 g/L de rhénium, 0,9 g/L de ruthénium, 38 mg/L de molybdène et 0,1 mol/L d'acide nitrique avec 100 mg de la résine échangeuse de cations dans un tube de centrifugation, agitation du tube pendant 30 minutes à 1 500 tr/min et 25°C, et séparation solide/liquide par centrifugation pendant 5 minutes à 14 500 tr/min ;
   - Lavages de la résine : au nombre de 2, chacun par mise en contact de 700 µL d'une solution aqueuse comprenant 0,1 mol/L d'acide nitrique avec la résine, agitation du tube pendant 5 minutes à 25 °C et 1500 tr/min, et séparation solide/liquide par centrifugation pendant 5 minutes à 14 500 tr/min ;
   - Élution du ruthénium par mise en contact de 700 µL d'une solution aqueuse comprenant 2,12 mol/L de nitrate de magnésium et 0,01 mol/L d'acide nitrique avec la résine, agitation du tube pendant 30 minutes à 1500 tr/min et 25 °C, et séparation solide/liquide par centrifugation pendant 5 minutes à 14 500 tr/min.
** Purification au moyen de la résine organique chélatante :*
   - Extraction du ruthénium par mise en contact des 700 µL de la solution aqueuse obtenue à l'issue de l'élution ci-avant avec 50 mg de la résine chélatante (préalablement équilibrée avec une solution aqueuse de nitrate de magnésium) dans un tube de centrifugation, agitation du tube pendant 24 heures à 1500 tr/min et 25 °C, et séparation solide/liquide par centrifugation pendant 5 minutes à 14 500 tr/min ;
   - Lavage de la résine par mise en contact de 700 µL d'une solution aqueuse comprenant 2,12 mol/L de nitrate de magnésium et 0,01 mol/L d'acide nitrique avec la résine, agitation du tube pendant 5 minutes à 1500 tr/min et 25 °C, et séparation solide/liquide par centrifugation pendant 5 minutes à 14 500 tr/min ;
   - Élution du ruthénium par mise en contact de 700 µL d'une solution aqueuse comprenant 10 mol/L d'acide chlorhydrique pour le premier test et 10 mol/L d'acide nitrique pour le second avec la résine, agitation du tube pendant 24 heures à 1500 tr/min et 25 °C, et séparation solide/liquide par centrifugation pendant 5 minutes à 14 500 tr/min.

Toutes les solutions issues des filtrations sont dosées par ICP-AES.

Ces analyses montrent qu'il est possible de parfaire la purification du ruthénium au moyen d'une résine organique chélatante comprenant un diglycolamide tel que le TODGA.

En effet, dans le cas de l'élution du ruthénium de la résine organique chélatante par la solution aqueuse d'acide chlorhydrique 10 M, une pureté finale du ruthénium de 99,84 % est obtenue avec des facteurs de décontamination du ruthénium vis-à-vis du rhénium (et donc du technétium) et du molybdène initialement présents dans la solution aqueuse ayant été soumise aux deux purifications successives de 9550 et 85 respectivement.

L'élution du ruthénium de la résine organique chélatante par la solution aqueuse d'acide nitrique 10 M conduit à des résultats encore plus intéressants puisqu'une pureté finale du ruthénium de 99,89 % est obtenue avec des facteurs de décontamination du ruthénium vis-à-vis du rhénium (et donc du technétium) et du molybdène initialement présents dans la solution aqueuse ayant été soumise aux deux purifications successives de 14 205 et de 118 respectivement.

### Références citées

**[1]** N.G. Zaitseva et al., Radiochimica Acta 1992, 56, 59-68
**[2]** N.G. Zaitseva et al., Applied Radiation and Isotopes 1996, 47(2), 145-151
**[3]** EP-A-0 347 625

## Revendications

1. Procédé de purification du ruthénium à partir d'une solution aqueuse A1 d'acide nitrique comprenant, outre le ruthénium à une concentration C1, du technétium à une concentration C2 au moins 10 fois supérieure à C1, et des impuretés métalliques, qui comprend au moins les étapes successives suivantes :
a) une extraction du ruthénium de la solution aqueuse au moyen d'une résine échangeuse de cations qui retient le ruthénium sélectivement par rapport au technétium lorsque le ruthénium et le technétium sont dans une solution aqueuse d'acide nitrique de molarité comprise entre une première valeur M1 et une deuxième valeur M2 supérieure à M1, cette extraction comprenant une mise en contact, dans une colonne de chromatographie, de la résine échangeuse de cations avec la solution aqueuse A1, la molarité de la solution aqueuse A1 étant comprise entre M1 et M2 ;
b) au moins un lavage de la résine échangeuse de cations avec une solution aqueuse A2 d'acide nitrique de molarité comprise entre M1 et M2 ; et
c) une élution du ruthénium de la résine échangeuse de cations avec une solution aqueuse A3 d'acide nitrique ou chlorhydrique de molarité supérieure à M2 ou une solution aqueuse A4 d'acide nitrique ou chlorhydrique de molarité au plus égale à M2 et comprenant un nitrate ou un chlorure métallique, moyennant quoi on obtient une solution aqueuse A5 contenant du ruthénium.

2. Procédé selon la revendication 1, qui comprend de plus, avant l'étape a), un ajustement de la molarité de la solution aqueuse A1 pour amener cette molarité à une valeur comprise entre M1 et M2.

3. Procédé selon la revendication 1 ou la revendication 2, dans lequel la résine échangeuse de cations est une résine poreuse à matrice poly(méth)acrylate ou polystyrénique réticulée et fonctionnalisée par des groupes acide sulfonique.

4. Procédé selon l'une quelconque des revendications 1 à 3, dans lequel les solutions aqueuses A1 et A2 comprennent de 0,01 mol/L à 0,5 mol/L d'acide nitrique, de préférence 0,1 mol/L d'acide nitrique.

5. Procédé selon l'une quelconque des revendications 1 à 4, dans lequel la solution aqueuse A3 est une solution aqueuse comprenant au moins 2 mol/L et, de préférence, au moins 4 mol/L d'acide nitrique ou chlorhydrique.

6. Procédé selon l'une quelconque des revendications 1 à 4, dans lequel la solution aqueuse A4 comprend de 0,01 mol/L à 0,5 mol/L d'acide nitrique ou chlorhydrique et au moins 1 mol/L et, de préférence, au moins 2 mol/L du nitrate ou chlorure métallique.

7. Procédé selon l'une quelconque des revendications 1 à 6, qui comprend une purification complémentaire du ruthénium présent dans la solution aqueuse A5 au moyen d'une résine organique chélatante.

8. Procédé selon la revendication 7, dans lequel la résine organique chélatante est une résine comprenant un diglycolamide, une bipyridine, une phénanthroline ou une thiourée comme agent chélatant.

9. Procédé selon la revendication 8, dans lequel la résine organique chélatante est une résine composée d'une matrice poly(méth)acrylate ou polystyrénique réticulée et imprégnée d'un diglycolamide, d'une bipyridine ou d'une phénanthroline.

10. Procédé selon la revendication 9, qui comprend au moins les étapes successives suivantes :
d) une extraction du ruthénium de la solution aqueuse A5, cette extraction comprenant une mise en contact, dans une colonne de chromatographie, de la résine organique chélatante avec la solution aqueuse A5, la solution aqueuse A5 comprenant au plus 4 mol/L d'acide nitrique ou chlorhydrique et, éventuellement, de 0,45 mol/L à 4 mol/L d'une base aminée ;
e) au moins un lavage de la résine organique chélatante avec une solution aqueuse A6 comprenant au plus 4 mol/L d'acide nitrique ou chlorhydrique et, éventuellement, de 0,45 mol/L à 4 mol/L de la base aminée ; et
f) une élution du ruthénium de la résine organique chélatante avec une solution aqueuse A7 comprenant au moins 0,01 mol/L d'acide nitrique ou chlorhydrique.

11. Procédé selon la revendication 8, dans lequel la résine organique chélatante est une résine composée d'une matrice poly(méth)acrylate ou polystyrénique réticulée et imprégnée d'une thiourée.

12. Procédé selon la revendication 11, qui comprend au moins les étapes successives suivantes :
d) une extraction du ruthénium de la solution aqueuse A5, cette extraction comprenant une mise en contact, dans une colonne de chromatographie, de la résine organique chélatante avec la solution aqueuse A5, la solution aqueuse A5 comprenant au plus 4 mol/L d'acide nitrique ou chlorhydrique et, éventuellement, de 0,45 mol/L à 4 mol/L d'une base aminée ;
e) au moins un lavage de la résine organique chélatante avec une solution aqueuse A6 comprenant au plus 4 mol/L d'acide nitrique ou chlorhydrique et, éventuellement, de 0,45 mol/L à 4 mol/L de la base aminée ; et
f) une élution du ruthénium de la résine organique chélatante avec une solution aqueuse A7 comprenant de 0,5 mol/L à 2 mol/L de la thiourée de formule (NH₂)₂C=S et de 0,01 mol/L à 1 mol/L d'acide chlorhydrique.

13. Procédé selon l'une quelconque des revendications 10 ou 12, qui comprend, entre les étapes c) et d), une dilution de la solution aqueuse A5 pour amener sa concentration en acide nitrique ou chlorhydrique à une valeur d'au plus 4 mol/L, et, éventuellement, un ajout de la base aminée.

14. Procédé selon l'une quelconque des revendications 1 à 13, dans lequel la solution aqueuse A1 est une solution issue de la dissolution dans l'acide nitrique d'une cible de technétium-99 ayant été irradiée par des protons et, de préférence, par une réaction nucléaire ⁹⁹Tc(p,3n)⁹⁷Ru dans la plage d'énergie des protons de 20 MeV à 100 MeV.

15. Procédé selon la revendication 14, dans lequel la solution aqueuse A1 comprend du ruthénium-97, du technétium-97 et, comme impureté métallique, du molybdène-97.

16. Procédé de production de ruthénium-97 à partir d'une cible de technétium-99 ayant été irradiée par des protons, qui comprend au moins les étapes successives suivantes :
i) préparation d'une solution aqueuse A1 d'acide nitrique comprenant du ruthénium à une concentration C1, du technétium à une concentration C2 au moins 10 fois supérieure à C1, et des impuretés métalliques par dissolution de la cible dans l'acide nitrique ;
ii) une purification du ruthénium-97 présent dans la solution aqueuse A1 par la mise en œuvre d'un procédé selon l'une quelconque des revendications 1 à 13.

## Patentansprüche

1. Verfahren zur Reinigung von Ruthenium aus einer wässrigen Lösung A1 von Salpetersäure, das neben Ruthenium in einer C1-Konzentration auch Technetium in einer mindestens 10-fach höheren C2-Konzentration als C1, und metallische Verunreinigungen umfasst, das mindestens die folgenden aufeinanderfolgenden Schritte umfasst:
a) ein Extrahieren des Rutheniums aus der wässrigen Lösung mittels eines Kationenaustauscherharzes, welches das Ruthenium selektiv gegenüber Technetium zurückhält, wenn sich Ruthenium und Technetium in einer wässrigen Salpetersäurelösung mit einer Molarität befinden, die zwischen einem ersten Wert M1 und einem zweiten Wert M2 größer als M1 liegt, wobei dieses Extrahieren ein Kontaktieren des Kationenaustauscherharzes mit der wässrigen Lösung A1 in einer Chromatographiesäule umfasst, wobei die Molarität der wässrigen Lösung A1 zwischen M1 und M2 liegt;
b) mindestens ein Waschen des Kationenaustauscherharzes mit einer wässrigen Salpetersäurelösung A2 mit einer Molarität, die zwischen M1 und M2 liegt; und
c) ein Eluieren des Rutheniums aus dem Kationenaustauscherharz mit einer wässrigen Lösung A3 von Salpeter- oder Salzsäure mit einer Molarität größer als M2 oder einer wässrigen Lösung A4 von Salpeter- oder Salzsäure mit einer Molarität von höchstens gleich M2 und ein Metallnitrat oder -chlorid umfassend, wodurch eine wässrige Lösung A5 erhalten wird, die Ruthenium enthält.

2. Verfahren nach Anspruch 1, das weiter vor Schritt a) ein Anpassen der Molarität der wässrigen Lösung A1 umfasst, um diese Molarität auf einen Wert zwischen M1 und M2 zu bringen.

3. Verfahren nach Anspruch 1 oder 2, wobei das Kationenaustauscherharz ein poröses Poly(meth)acrylat- oder Polystyrolmatrixharz ist, das durch Sulfonsäuregruppen vernetzt und funktionalisiert ist.

4. Verfahren nach einem der Ansprüche 1 bis 3, wobei die wässrigen Lösungen A1 und A2 0,01 mol/l bis 0,5 mol/l Salpetersäure, vorzugsweise 0,1 mol/l Salpetersäure umfassen.

5. Verfahren nach einem der Ansprüche 1 bis 4, wobei die wässrige Lösung A3 eine wässrige Lösung ist, die mindestens 2 mol/l und vorzugsweise mindestens 4 mol/l Salpeter- oder Salzsäure umfasst.

6. Verfahren nach einem der Ansprüche 1 bis 4, wobei die wässrige Lösung A4 0,01 mol/l bis 0,5 mol/l Salpeter- oder Salzsäure und mindestens 1 mol/l und vorzugsweise mindestens 2 mol/l Metallnitrat oder -chlorid umfasst.

7. Verfahren nach einem der Ansprüche 1 bis 6, das eine ergänzende Reinigung des in der wässrigen Lösung A5 vorhandenen Rutheniums mittels eines chelatbildenden organischen Harzes umfasst.

8. Verfahren nach Anspruch 7, wobei das chelatbildende organische Harz ein Harz ist, das Diglycolamid, Bipyridin, Phenanthrolin oder Thiourea als Chelatbildner umfasst.

9. Verfahren nach Anspruch 8, wobei das chelatbildende organische Harz ein Harz ist, das aus einer vernetzten Poly(meth)acrylat- oder Polystyrolmatrix besteht und mit Diglycolamid, Bipyridin oder Phenanthrin imprägniert ist.

10. Verfahren nach Anspruch 9, das mindestens die folgenden aufeinanderfolgenden Schritte umfasst:
d) ein Extrahieren von Ruthenium aus der wässrigen Lösung A5, wobei dieses Extrahieren das Kontaktieren, in einer Chromatographiesäule, des chelatbildenden organischen Harzes mit der wässrigen Lösung A5 umfasst, wobei die wässrige Lösung A5 höchstens 4 mol/l Salpeter- oder Salzsäure und gegebenenfalls 0,45 mol/l bis 4 mol/l einer Aminobasis umfasst;
e) mindestens ein Waschen des chelatbildenden organischen Harzes mit einer wässrigen Lösung A6 umfassend höchstens 4 mol/l Salpeter- oder Salzsäure und eventuell 0,45 mol/l bis 4 mol/l der Aminobasis; und
f) ein Eluieren des Rutheniums aus dem chelatbildenden organischen Harz mit einer wässrigen Lösung A7, die mindestens 0,01 mol/l Salpeter- oder Salzsäure umfasst.

11. Verfahren nach Anspruch 8, wobei das chelatbildende organische Harz ein Harz ist, das aus einer vernetzten und mit Thiourea imprägnierten Poly(meth)acrylat- oder Polystyrolmatrix besteht.

12. Verfahren nach Anspruch 11, das mindestens die folgenden aufeinanderfolgenden Schritte umfasst:
d) ein Extrahieren von Ruthenium aus der wässrigen Lösung A5, wobei dieses Extrahieren das Kontaktieren, in einer Chromatographiesäule, des chelatbildenden organischen Harzes mit der wässrigen Lösung A5 umfasst, wobei die wässrige Lösung A5 höchstens 4 mol/l Salpeter- oder Salzsäure und gegebenenfalls 0,45 mol/l bis 4 mol/l einer Aminobasis umfasst;
e) mindestens ein Waschen des chelatbildenden organischen Harzes mit einer wässrigen Lösung A6 umfassend höchstens 4 mol/l Salpeter- oder Salzsäure und eventuell 0,45 mol/l bis 4 mol/l der Aminobasis; und
f) ein Eluieren des Rutheniums aus dem chelatbildenden organischen Harz mit einer wässrigen Lösung A7, die 0,5 mol/l bis 2 mol/l Thioharnstoff der Formel (NH₂)₂C=S und 0,01 mol/l bis 1 mol/l Salzsäure umfasst.

13. Verfahren nach einem der Ansprüche 10 oder 12, das zwischen den Schritten c) und d) ein Verdünnen der wässrigen Lösung A5 umfasst, um deren Salpeter- oder Salzsäurekonzentration auf einen Wert von höchstens 4 mol/l zu bringen, und eventuell ein Zugeben der Aminobasis.

14. Verfahren nach einem der Ansprüche 1 bis 13, wobei die wässrige Lösung A1 eine Lösung aus dem Auflösen in der Salpetersäure eines Technetium-99-Targets ist, das durch Protonen und vorzugsweise durch eine Kernreaktion ⁹⁹Tc(p,3n)⁹⁷Ru in dem Protonenenergiebereich von 20 MeV bis 100 MeV bestrahlt worden ist.

15. Verfahren nach Anspruch 14, wobei die wässrige Lösung A1 Ruthenium-97, Technetium-97 und als metallische Verunreinigung Molybdän-97 umfasst.

16. Verfahren zur Herstellung von Ruthenium-97 aus einem protonenbestrahlten Technetium-99-Target, das mindestens die folgenden aufeinanderfolgenden Schritte umfasst:
i) Herstellen einer wässrigen Salpetersäurelösung A1, die Ruthenium in einer C1-Konzentration, Technetium in einer mindestens 10-fach höheren C2-Konzentration als C1 beträgt, und metallische Verunreinigungen durch Auflösen des Targets in Salpetersäure umfasst;
ii) ein Reinigen des in der wässrigen Lösung A1 vorhandenen Ruthenium-97 durch das Durchführen eines Verfahrens nach einem der Ansprüche 1 bis 13.

## Claims

1. A process for purifying ruthenium from an aqueous solution A1 of nitric acid comprising, in addition to ruthenium at a concentration C1, technetium at a concentration C2 at least 10 times higher than C1, and metallic impurities, which comprises at least the following successive steps:
a) extracting ruthenium from the aqueous solution by means of a cation-exchange resin which retains ruthenium selectively with respect to technetium when ruthenium and technetium are in an aqueous solution of nitric acid with a molarity comprised between a first value M1 and a second value M2 higher than M1, this extraction comprising contacting, in a chromatography column, the cation-exchange resin with the aqueous solution A1, the molarity of the aqueous solution A1 being comprised between M1 and M2;
b) washing at least once the cation-exchange resin with an aqueous solution A2 of nitric acid with a molarity comprised between M1 and M2; and
c) eluting ruthenium from the cation-exchange resin with an aqueous solution A3 of nitric or hydrochloric acid with a molarity higher than M2 or an aqueous solution A4 of nitric or hydrochloric acid with a molarity at most equal to M2 and comprising a metal nitrate or chloride, whereby an aqueous solution A5 containing the ruthenium is obtained.

2. The process according to claim 1, further comprising, prior to step a), adjusting the molarity of the aqueous solution A1 to bring this molarity to a value comprised between M1 and M2.

3. The process according to claim 1 or claim 2, wherein the cation-exchange resin is a porous resin with a cross-linked poly(meth)acrylate or polystyrenic matrix functionalised by sulphonic acid groups.

4. The process according to any one of claims 1 to 3, wherein the aqueous solutions A1 and A2 comprise from 0.01 mol/L to 0.5 mol/L of nitric acid, preferably 0.1 mol/L of nitric acid.

5. The process according to any one of claims 1 to 4, wherein the aqueous solution A3 is an aqueous solution comprising at least 2 mol/L and, preferably, at least 4 mol/L of nitric or hydrochloric acid.

6. The process according to any one of claims 1 to 4, wherein the aqueous solution A4 comprises from 0.01 mol/L to 0.5 mol/L of nitric or hydrochloric acid and at least 1 mol/L and, preferably, at least 2 mol/L of the metal nitrate or chloride.

7. The process according to any one of claims 1 to 6, comprising an additional purification of the ruthenium present in the aqueous solution A5 by means of a chelating organic resin.

8. The process according to claim 7, wherein the chelating organic resin is a resin comprising a diglycolamide, a bipyridine, a phenanthroline or a thiourea as a chelating agent.

9. The process according to claim 8, wherein the chelating organic resin is a resin made of a crosslinked poly(meth)acrylate or polystyrenic matrix impregnated with a diglycolamide, a bipyridine or a phenanthroline.

10. The process according to claim 9, comprising at least the following successive steps:
d) extracting ruthenium from the aqueous solution A5, this extraction comprising contacting, in a chromatography column, the chelating organic resin with the aqueous solution A5, the aqueous solution A5 comprising at most 4 mol/L of nitric or hydrochloric acid and, possibly, from 0.45 mol/L to 4 mol/L of an amine base;
e) washing at least once the chelating organic resin with an aqueous solution A6 comprising at most 4 mol/L of nitric or hydrochloric acid and, possibly, from 0.45 mol/L to 4 mol/L of the amine base; and
f) eluting ruthenium from the chelating organic resin with an aqueous solution A7 comprising at least 0.01 mol/L of nitric or hydrochloric acid.

11. The process according to claim 8, wherein the chelating organic resin is a resin made of a crosslinked poly(meth)acrylate or polystyrenic matrix impregnated with a thiourea.

12. The process according to claim 11, comprising at least the following successive steps:
d) extracting ruthenium from the aqueous solution A5, this extraction comprising contacting, in a chromatography column, the chelating organic resin with the aqueous solution A5, the aqueous solution A5 comprising at most 4 mol/L of nitric or hydrochloric acid and, possibly, from 0.45 mol/L to 4 mol/L of an amine base;
e) washing at least once the chelating organic resin with an aqueous solution A6 comprising at most 4 mol/L of nitric or hydrochloric acid and, possibly, from 0.45 mol/L to 4 mol/L of the amine base; and
f) eluting ruthenium from the chelating organic resin with an aqueous solution A7 comprising from 0.5 mol/L to 2 mol/L of thiourea of formula (NH₂)₂C=S and from 0.01 mol/L to 1 mol/L of hydrochloric acid.

13. The process according to any one of claims 10 or 12, comprising, between steps c) and d), diluting the aqueous solution A5 to bring its concentration of nitric or hydrochloric acid to a value of at most 4 mol/L, and, possibly, adding the amine base.

14. The process according to any one of claims 1 to 13, wherein the aqueous solution A1 is a solution resulting from the dissolution, in nitric acid, of a technetium-99 target having been irradiated with protons and, preferably, by a nuclear reaction ⁹⁹Tc(p,3n)⁹⁷Ru in the proton energy range of 20 MeV to 100 MeV.

15. The process according to claim 14, wherein the aqueous solution A1 comprises ruthenium-97, technetium-97 and, as a metal impurity, molybdenum-97.

16. A process for producing ruthenium-97 from a technetium-99 target having been irradiated with protons, comprising at least the following successive steps:
i) preparing an aqueous solution A1 of nitric acid comprising ruthenium at a concentration C1, technetium at a concentration C2 at least 10 times higher than C1, and metal impurities by dissolving the target in nitric acid;
ii) purifying the ruthenium-97 present in the aqueous solution A1 by implementing a process according to any one of claims 1 to 13.
